# EUROPÄISCHE PATENTSCHRIFT

(11) **EP 1 144 213 B1**
(45) Veröffentlichungstag und Bekanntmachung des Hinweises auf die Patenterteilung: **24.07.2002**
(21) Anmeldenummer: 99963449.6
(22) Anmeldetag: 09.12.1999
(51) Int. Cl.: B60H 1/00

(54) **VERFAHREN UND VORRICHTUNG ZUM BETREIBEN EINES STELLANTRIEBES EINES KRAFTFAHRZEUGES MIT UNTERSCHIEDLICHEN BORDNETZSPANNUNGEN**
METHOD AND DEVICE FOR OPERATING AN ACTUATING DRIVE OF A MOTOR VEHICLE WITH DIFFERENT VEHICLE ELECTRIC SYSTEM VOLTAGES
PROCEDE ET DISPOSITIF POUR LA COMMANDE D'UN SERVOMOTEUR DE VEHICULE AUTOMOBILE AYANT DES TENSIONS DE RESEAU DE BORD DIFFERENTES

(30) Priorität: 16.12.1998 DE 19857978
(43) Veröffentlichungstag der Anmeldung: 17.10.2001
(73) Patentinhaber: Siemens Aktiengesellschaft, 80333 München (DE)
(72) Erfinder: KEMPKEN, Ludger, D-64331 Weiterstadt (DE)
(86) Internationale Anmeldenummer: EP9909687
(87) Internationale Veröffentlichungsnummer: WO0035689

(56) Entgegenhaltungen:
- EP-A- 0 745 495
- DE-A- 4 444 810

## Beschreibung

Die Erfindung betrifft ein Verfahren zum Betreiben eines Stellantriebes eines Kraftfahrzeuges mit unterschiedlichen Bordnetzspannungen, wobei der Stellantrieb zum Betreiben eines Stellgliedes mit der Bordnetzspannung verbunden wird sowie eine Vorrichtung zur Durchführung des Verfahrens.

Die Spannungsversorgung von Kraftfahrzeugklimaanlagen erfolgt über das Bordnetz des Kraftfahrzeuges, dessen Spannung zur Zeit bei Personenkraftwagen 12 V beträgt. Aufgrund der in modernen Personenkraftwagen vorhandenen Vielzahl an elektrischen Verbrauchern mit hoher Leistungsaufnahme werden für die Zukunft auch Bordnetze mit einer höheren Spannung in Erwägung gezogen.

Unterschiedliche Spannungen in den Bordnetzsystemen sind auch bei Lastkraftwagen vorgesehen. In Europa beträgt die Bordnetzspannung von LKW's 24 V, in Amerika dagegen nur 12 V. Dies erfordert bei den Herstellern von Klimaanlagen einen entsprechenden Aufwand in der Herstellung und Bereithaltung dieser Klimaanlagen, da für jedes Bordnetz eine entsprechende Klimaanlage hergestellt werden muß.

Der Erfindung liegt die Aufgabe zugrunde, ein Verfahren zur Ansteuerung eines Stellantriebes im Kraftfahrzeug anzugeben, welches auch bei unterschiedlichen Bordnetzspannungen zuverlässig arbeitet.

Die Aufgabe wird erfindungsgemäß dadurch gelöst, daß die Bordnetzspannung gemessen und in Abhängigkeit von der Bordnetzspannung ein den Stellantrieb ansteuerndes Signal so variiert wird, daß sich am Stellantrieb immer annähernd dieselbe Spannung einstellt.

Die Erfindung hat dabei den Vorteil, daß durch die zeitliche Variation des digitalen Signales, welches den Stellantrieb steuert, der Spannungspegel geändert wird. Auf eine Pegelumsetzung der Bordnetzspannung selbst wird dabei verzichtet, wodurch zusätzlicher Schaltungsaufwand vermieden wird. Die Erfindung ermöglicht den Einsatz derselben Klimaanlage in Fahrzeugen mit den unterschiedlichsten Bordnetzen wie 12 V, 24 V oder 48 V.

Vorteilhafterweise wird während des Anliegens einer ersten Bordnetzspannung der Stellantrieb mit einem ersten Ansteuersignal und während des Anliegens einer zweiten Bordnetzspannung mit einem zweiten Ansteuersignal angesteuert.

Diese Ansteuersignale lassen sich einfach durch einen Mikroprozessor erzeugen. Somit wird durch einfache digitale Schaltungsmaßnahmen eine kostengünstige Ansteuermöglichkeit ohne zusätzlichen Hardwareaufwand ermöglicht.

In einer Weiterbildung ist die erste Bordnetzspannung kleiner als die zweite Bordnetzspannung, wobei bei Erfassung der ersten Bordnetzspannung der Stellantrieb durch ein Signal mit konstantem Signalpegel angesteuert wird, während bei Erfassung der zweiten Bordnetzspannung der Stellantrieb mit einem pulsweitenmodulierten Signal angesteuert wird, dessen Puls-Pausen-Verhältnis so ausgebildet ist, daß sich am Stellantrieb annähernd die erste Bordnetzspannung einstellt.

Die Erfindung hat den Vorteil, daß durch die Variation des Ansteuersignales bei Anliegen einer höheren Versorgungsspannung, wie beispielsweise 24 V oder 48 V, dieses so variiert wird, daß aus Sicht des Stellantriebes unabhängig vom Anliegen der tatsächlichen Versorgungsspannung immer nur 12 V anliegen.

In einer anderen Weiterbildung der Erfindung steuert bei einer Vorrichtung zur Einstellung einer Innenraumtemperatur in einem Kraftfahrzeug bei Einschaltung einer Bordnetzspannung eine Klimaregeleinrichtung in Abhängigkeit von einem vorgegebenen Innenraumtemperaturwert eine Endstufe eines Stellantriebes zur Betätigung einer Klimaklappe an. Beim Anliegen einer ersten Bordnetzspannung steuert die Klimaregeleinrichtung die Endstufe mit einem konstantem Signalpegel an und beim Anliegen der zweiten Bordnetzspannung , die größer ist als die erste Bordnetzspannung, steuert die Klimaregeleinrichtung die Endstufe mit einem pulsweitenmodulierten Signal an, dessen Puls-Pausen-Verhältnis so ausgebildet ist, daß sich am Stellantrieb annähernd die erste Bordnetzspannung einstellt.

Im Falle von Klimaanlagen für LKW, die sowohl für den europäischen Markt mit einer Bordnetzspannung von 24 V als auch für den amerikanischen Markt mit einer Bordnetzspannung von 12 V vorgesehen sind, kann somit ein und dieselbe Klimaanlage mit zugehöriger Bedieneinheit verwendet werden.

Vorteilhafterweise ist der Stellantrieb ein Elektromotor, welcher eine Frischluftklappe oder eine Umluftklappe betätigt, die in einem Luftkanal der Klimaanlage angeordnet sind.

Um eine genaue Positionierung der Klappen zu ermöglichen, wird bei Annäherung der Frischluftklappe oder der Umluftklappe an einen, durch die Klimaregeleinrichtung vorgegebenen Sollwert die Drehgeschwindigkeit der Frischluft- oder Umluftklappe durch Variation des pulsweitenmodulierten Signales verlangsamt.

In einer Ausgestaltung ist die Klimaregeleinrichtung mit einer Einrichtung zur Messung der Bordnetzspannung verbunden und gibt in Abhängigkeit des Ausgangssignales der Meßeinrichtung das Ansteuersignal für den Stellantrieb aus.

In einer vorteilhaften Weiterbildung ist die Einrichtung zur Messung der Bordnetzspannung Bestandteil der Klimaregeleinrichtung.

Die Erfindung läßt zahlreiche Ausführungsformen zu. Eine davon soll anhand der in der Zeichnung dargestellten Figuren näher erläutert werden.
Es zeigt:
- Figur 1: Klimagerät eines Kraftfahrzeuges,
- Figur 2: Ansteuerung des Stellantriebes.

Gleiche Merkmale sind mit gleichen Bezugszeichen gekennzeichnet.

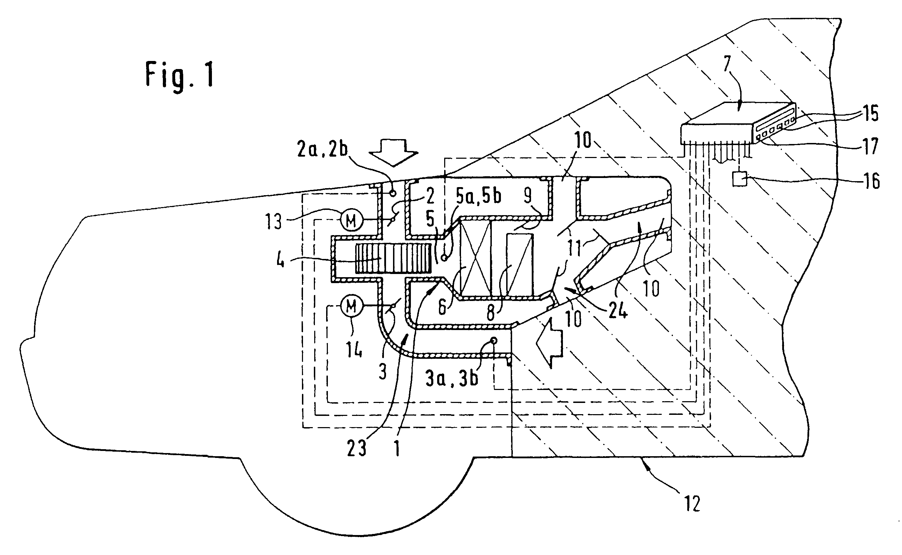

In Figur 1 ist das Klimagerät 1 in seiner konkreten Anordnung im Kraftfahrzeug 12 dargestellt. Über die Frischluftklappe 2 wird Frischluft aus der Umgebung des Fahrzeuges in das Kraftfahrzeug 12 angesaugt. Die Stellung der Frischluftklappe 2 wird von einem Stellmotor 13 in Abhängigkeit von elektrischen Signalen gesteuert, die vom Klimaregelgerät 7 erzeugt werden.

Die Umluft aus dem Fahrgastraum des Kraftfahrzeuges wird über die Umiuftklappe 3 vom Klimagerät 1 ebenfalls angesaugt. Auch die Stellung der Umluftklappe 3 wird in Abhängigkeit von elektrischen Signalen des Klimaregelgerätes 7 von einem Stellmotor 14 gesteuert.

Die Frischluftklappe 2 und die Umluftklappe 3 sind dabei im Luftkanal 23 des Klimagerätes angeordnet. Die Um- und Frischluft wird mittels eines sich ebenfalls im Luftkanal 23 befindlichen Ventilators 4 gefördert und dabei gleichzeitig verwirbelt. Es entsteht Mischluft 5, die dem Verdampfer 6 zugeführt und von diesen im Kühlbetrieb an den Fahrzeuginnenraum abgegeben wird.

Dem Verdampfer 6 ist ein Heizwärmetauscher 8 nachgeordnet, welcher nur im Heizbetrieb eingesetzt wird.

Im Kühlbetrieb wird die Mischluft 5 über Ausströmer 10 an den Fahrgastraum abgegeben. Diese Ausströmer 10 sind in Kanälen 24 angeordnet, die in Richtung Windschutzscheibe, in Richtung Fahrer bzw. Beifahrer und in Richtung des Fußbereiches des Fahrers bzw. Beifahrers weisen. Mittels der in den einzelnen Kanälen angeordneten Luftverteilerklappen 11, kann der Lufteintritt vom Fahrer bzw. Beifahrer reguliert werden.

Um die thermische Belastung des Systems festzustellen, sind im Frischluftstrom in der Nähe der Frischluftklappe 2 ein Temperatursensor 2a und ein Sensor für die relative Luftfeuchtigkeit 2b angeordnet.

Ein Temperatursensor 3a und ein weiterer Sensor für die relative Luftfeuchtigkeit 3b sind in der Nähe der Umluftklappe 3 angeordnet. Die Signale der Temperatursensoren 2a, 3a und der Luftfeuchtesensoren 2b, 3b werden dem Klimaregelgerät 7 zur Berechnung der augenblicklichen Lufttemperatur im Fahrgastraum zugeführt, wobei das Klimaregelgerät 7 diese tatsächliche Innenraumtemperatur mit einer Wunschtemperatur vergleicht. In Abhängigkeit von diesem Vergleich steuert das Klimaregelgerät 7 die Frischluftklappe 2 und/oder die Umluftklappe 3 so an, daß diese sich öffnen bzw. schließen.

Das Klimaregelgerät 7 enthält mehrere Bedienelemente 15 u.a. zur Umschaltung zwischen einem automatischen und mehreren individuell einstellbaren Betriebszuständen. Für die Einstellung der Wunschtemperatur der Fahrer- und Beifahrerseite sind Temperatureinstellelemente 17 vorhanden.

Eingangssignale für das Klimasteuergerät 7 sind neben der Innenraumtemperatur T, die mittels eines Temperatursensors 16 gemessen wird, auch die Einstellgrößen, die über die Bedienelemente 15 des Klimasteuergerätes 7 gewählt werden. Arbeitet das Klimasteuergerät 7 im automatischen Betriebsmodus, so erfolgt die Luftverteilung im Innenraum über die Ausströmöffnungen 10 in einem vorgegebenen Verhältnis. Der Öffnungsgrad der Frischluftklappe 2 bzw. der Umluftklappe 3 wird automatisch mittels eines im Klimaregelgerät 7 abgespeicherten Programms entsprechend den aktuellen Erfordernissen eingestellt. Die erforderlichen Eingangskenngrößen erhält das Klimaregelgerät 7 über die verschiedenen schon beschriebenen Sensoren.

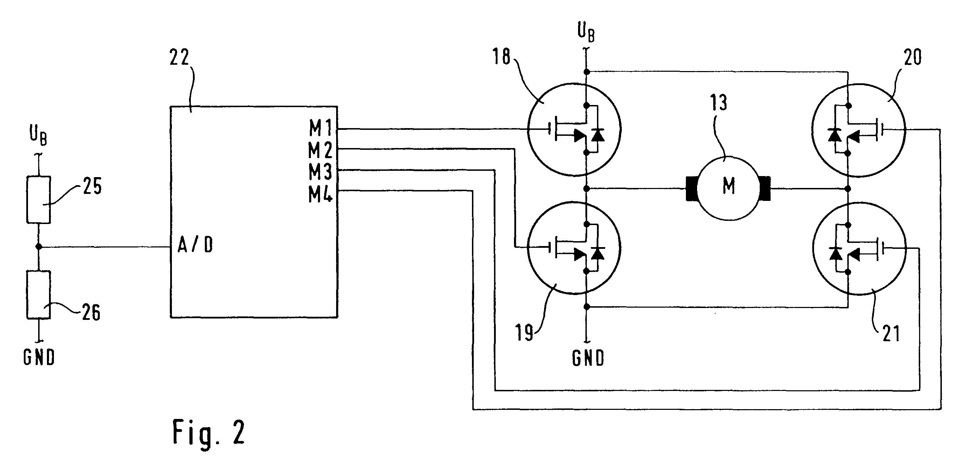

In Figur 2 ist eine Ansteuerung des Stellmotors 13 dargestellt, welcher die Frischluftklappe 2 betätigt. Die Ansteuerung des Stellmotors 14, der die Umluftklappe 3 betätigt, erfolgt analog.

Das Klimaregelgerät 7, welches als Kernstück einen Mikrocontroller 22 enthält, ist über seinen A/D-Wandler mit der Betriebsspannung U_{B} verbunden. Der A/D-Wandler ist dabei so ausgebildet, daß er als Betriebsspannungserkennung dient und dabei feststellt, ob ein Bordnetz von 12 V oder von 24 V bzw. von 48 V anliegt. Die Beschaltung des A/D-Einganges des Mikrocontrollers 22 erfolgt dabei über einen Spannungsteiler 25, 26, welcher zwischen Masse GND und Betriebsspannung U_{B} angeordnet ist.

Der Mikrocontroller 22 weist vier Ausgänge M1 bis M4 auf, welche jeweils mit einem Endstufentransistor 18, 19, 20, 21 verbunden sind. Die Endstufentransistoren 18, 19, 20, 21 sind dabei als Brückenschaltung mit dem Stellmotor 13 verschaltet. Die Brückenendstufe 18, 19, 20, 21 ist ebenfalls an die Betriebsspannung U_{B} und an Masse GND angeschlossen.

Detektiert der A/D-Wandler des Mikroprozessors 22 nach Einschaltung der Klemme 15 des Kraftfahrzeuges eine Bordnetzspannung von 12 V, so liegen an den Ausgängen des Mikroprozessors 22 folgende Signale während der gesamten Betriebsdauer an. Der Ausgang M1 des Mikroprozessors 22 führt ein High-Signal, mit welchem der Transistor 18 angesteuert wird. Der Ausgang M2 steuert den Transistor 19 mit Low an. Der Ausgang M3 steuert den Transistor 21 mit High an, während der Transistor 20 an Low liegt (Ausgang M4).

Detektiert die Betriebsspannungserkennung nach Einschalten des Fahrzeugmotors eine Bordnetzspannung von 24 V, wird der Transistor 18 unverändert mit High und der Transistor 19 unverändert mit Low angesteuert. Der Transistor 20 wird auch in diesem Fall mit Low beschaltet.

Der Transistor 21 wird vom Ausgang M3 des Prozessors 22 mittels eines Rechteck-PWM-Signales angesteuert, dessen Puls-Pausen-Verhältnis 50 % beträgt. Dabei wird mit einer Frequenz zwischen 100 Hz und 100 KHz gearbeitet, die ebenfalls vom Mikrocontroller 22 erzeugt wird. Aufgrund dieser pulsweitenmodulierten Spannung wird eine Motornennspannung von 12 V am Stellmotor 13 eingestellt, so daß der Motor 13 auch bei einem Bordnetz von 24 V arbeitet. Bei einer Bordnetzspannung von 48 V würde das Puls-Pausen-Verhältnis des PWM-Signales 25 % betragen.

## Patentansprüche

1. Verfahren zum Betreiben eines Stellantriebes (13, 14) eines Kraftfahrzeuges mit unterschiedlichen Bordnetzspannungen, wobei der Stellantrieb (13, 14) zum Betreiben eines Stellgliedes mit der Bordnetzspannung verbunden wird, **dadurch gekennzeichnet, daß** die Bordnetzspannung gemessen und in Abhängigkeit von der gemessenen Bordnetzspannung ein den Stellantrieb (13, 14) ansteuerndes Signal so variiert wird, daß sich am Stellantrieb immer dieselbe Spannung einstellt.

2. Verfahren nach Anspruch 1, **dadurch gekennzeichnet, daß** während des Anliegens einer ersten Bordnetzspannung der Stellantrieb (13, 14) mit einem ersten Steuersignal und während des Anliegens einer zweiten Bordnetzspannung mit einem zweiten Ansteuersignal angesteuert wird.

3. Verfahren nach Anspruch 2, **dadurch gekennzeichnet, daß** die erste Bordnetzspannung kleiner ist als die zweite Bordnetzspannung, wobei bei Erfassung der ersten Bordnetzspannung der Stellantrieb (13, 14) durch ein Signal mit konstantem Signalpegel angesteuert wird, während bei Erfassung der zweiten Bordnetzspannung der Stellantrieb mit einem pulsweitenmodulierten Signal angesteuert wird, dessen Puls-Pausen-Verhältnis so ausgebildet ist, daß sich am Stellantrieb annähernd die erste Betriebsspannung einstellt.

4. Vorrichtung zur Einstellung einer Innenraumtemperatur in einem Kraftfahrzeug (12), bei welcher zur Durchführung des Verfahrens nach Anspruch1 bei Einschalten einer Bordnetzspannung eine Klimaregeleinrichtung (7) in Abhängigkeit von einem vorgegebenen Innenraumtemperaturwert eine Endstufe (18, 19, 20, 21) eines Stellantriebes (13, 14) zur Betätigung einer Klimaklappe ansteuert, **dadurch gekennzeichnet, daß** während des Anliegens einer ersten Bordnetzspannung die Klimaregeleinrichtung (7) die Endstufe (18, 19, 20, 21) mit einem konstanten Signalpegel ansteuert und beim Anliegen einer zweiten Bordnetzspannung, die größer als die erste Bordnetzspannung ist, die Klimaregeleinrichtung (7) die Endstufe (18, 19, 20, 21) mit einem pulsweitenmodulierten Signal ansteuert, dessen Puls-Pausen-Verhältnis so ausgebildet ist, daß sich am Stellantrieb (13, 14) annähernd die erste Bordnetzspannung einstellt.

5. Vorrichtung nach Anspruch 4, **dadurch gekennzeichnet, daß** der Stellantrieb (13, 14) ein Elektromotor ist, welcher eine Frischluftklappe (2) oder eine Umluftklappe (3) betätigt, die in einem Luftkanal (23) angeordnet sind.

6. Vorrichtung nach Anspruch 5, **dadurch gekennzeichnet, daß** bei Annäherung der Frischluftklappe (2) oder der Umluftklappe (3) an einen durch die Klimaregeleinrichtung (7) vorgegebenen Sollwert die Drehgeschwindigkeit der Frischluft- (2) oder Umluftklappe (3) durch Variation des pulsweitenmodulierten Signales verlangsamt wird.

7. Vorrichtung nach Anspruch 4, **dadurch gekennzeichnet, daß** die Klimaregeleinrichtung (7) mit einer Einrichtung zur Messung der Bordnetzspannung verbunden ist und in Abhängigkeit des Ausgangssignales der Meßeinrichtung das Ansteuersignal für den Stellantrieb (13, 14) ausgibt.

8. Vorrichtung nach Anspruch 7, **dadurch gekennzeichnet, daß** die Einrichtung zur Messung der Bordnetzspannung Bestandteil der Klimaregeleinrichtung (7) ist.

## Claims

1. Method for operating an actuating drive (13, 14) of a motor vehicle with different on-board electrical system voltages, the actuating drive (13, 14) being connected to the on-board electrical system voltage in order to operate an actuator, **characterized in that** the on-board electrical system voltage is measured and, in a manner dependent on the measured on-board electrical system voltage, a signal which activates the actuating drive (13, 14) is varied in such a way that the same voltage is always established at the actuating drive.

2. Method according to Claim 1, **characterized in that** the actuating drive (13, 14) is activated by a first control signal during the presence of a first on-board electrical system voltage and by a second activation signal during the presence of a second on-board electrical system voltage.

3. Method according to Claim 2, **characterized in that** the first on-board electrical system voltage is smaller than the second on-board electrical system voltage, the actuating drive (13, 14) being activated by a signal having a constant signal level when the first on-board electrical system voltage is detected, whereas when the second on-board electrical system voltage is detected, the actuating drive is activated by a pulse-width-modulated signal whose mark-space ratio is designed in such a way that approximately the first operating voltage is established at the actuating drive.

4. Apparatus for setting an interior-space temperature in a motor vehicle (12), in which, in order to carry out the method according to Claim 1, when an on-board electrical system voltage is switched on, an air-conditioning regulating device (7) activates, in a manner dependent on a predetermined interior-space temperature value, an output stage (18 ,19 ,20 ,21) of an actuating drive (13, 14) for the purpose of actuating an air-conditioning flap; **characterized in that,** during the presence of a first on-board electrical system voltage the air-conditioning regulating device (7) activates the output stage (18, 19, 20, 21) with a constant signal level and, during the presence of a second on-board electrical system voltage which is larger than the first on-board electrical system voltage, the air-conditioning regulating device (7) activates the output stage (18, 19, 20, 21) with a pulse-width-modulated signal whose mark-space ratio is designed in such a way that approximately the first on-board electrical system voltage is established at the actuating drive (13, 14).

5. Apparatus according to Claim 4, **characterized in that** the actuating drive (13, 14) is an electric motor which actuates a fresh-air flap (2) or a circulating-air flap (3), which are arranged in an air duct (23).

6. Apparatus according to Claim 5, **characterized in that** when the fresh-air flap (2) or the circulating-air flap (3) approaches a desired value predetermined by the air-conditioning regulating device (7), the rotational speed of the fresh-air flap (2) or circulating-air flap (3) is slowed down by variation of the pulse-width-modulated signal.

7. Apparatus according to Claim 4, **characterized in that** the air-conditioning regulating device (7) is connected to a device for measuring the on-board electrical system voltage and outputs the activation signal for the actuating drive (13, 14) in a manner dependent on the output signal of the measuring device.

8. Apparatus according to Claim 7, **characterized in that** the device for measuring the on-board electrical system voltage is part of the air-conditioning regulating device (7).

## Revendications

1. Procédé pour faire travailler un dispositif d'entraînement (13, 14) d'un véhicule automobile avec différentes tensions de réseau de bord, le dispositif d'entraînement (13, 14) étant relié à la tension de réseau de bord pour faire travailler un organe de réglage, **caractérisé en ce que** la tension de réseau de bord est mesurée et qu'en fonction de la tension de réseau de bord mesurée, un signal qui commande le dispositif d'entraînement (13, 14) est modifié de manière qu'il s'établisse toujours approximativement la même tension sur le dispositif d'entraînement.

2. Procédé selon la revendication 1, **caractérisé en ce que**, dans le cas de l'application d'une première tension de réseau de bord, le dispositif d'entraînement (13, 14) est commandé avec un premier signal de commande et que, dans le cas de l'application d'une deuxième tension de réseau de bord, il est commandé avec un deuxième signal de commande.

3. Procédé selon la revendication 2, **caractérisé en ce que** la première tension de réseau de bord est inférieure à la deuxième tension de réseau de bord, cependant que, dans le cas de la détection de la première tension de réseau de bord, le dispositif d'entraînement (13, 14) est commandé par un signal possédant un niveau de signal constant tandis que, dans le cas de la détection d'une deuxième tension de réseau de bord, le dispositif d'entraînement est commandé avec un signal modulé en largeur d'impulsions dont le rapport cyclique est calculé de manière que la première tension de réseau de bord s'établisse approximativement sur le dispositif d'entraînement.

4. Dispositif pour le réglage d'une température d'espace intérieur dans un véhicule automobile (12) dans lequel, pour la mise en oeuvre du procédé selon la revendication 1, lors de la mise en service de la tension de réseau de bord, un dispositif de réglage de la climatisation (7) commande un étage final (18, 19, 20, 21) d'un dispositif d'entraînement (13, 14) destiné à l'actionnement d'un volet de climatisation en fonction d'une valeur de température d'espace intérieur choisie, **caractérisé en ce que**, dans le cas de l'application d'une première tension de réseau de bord, le dispositif de réglage de la climatisation (7) commande l'étage final (18, 19, 20, 21) avec un niveau de signal constant et que, dans le cas de l'application de la deuxième tension de réseau de bord qui est supérieure à la première tension de réseau de bord, le dispositif de réglage de la climatisation (7) commande l'étage final (18, 19, 20, 21) avec un signal modulé en largeur d'impulsions dont le rapport cyclique est calculé de manière que la première tension de réseau de bord s'établisse approximativement sur le dispositif d'entraînement (13, 14).

5. Dispositif selon la revendication 4, **caractérisé en ce que** le dispositif d'entraînement (13, 14) est un moteur électrique qui actionne un volet d'air neuf (2) ou un volet d'air recyclé (3) qui sont agencés dans un conduit d'air (23).

6. Dispositif selon la revendication 5, **caractérisé en ce que** lorsque le volet d'air neuf (2) ou le volet d'air recyclé (3) se rapproche d'une valeur de consigne choisie par le dispositif de réglage de la climatisation (7), la vitesse de rotation du volet d'air neuf (2) ou du volet d'air recyclé (3) est ralentie par une modification du signal modulé en largeur d'impulsions.

7. Dispositif selon la revendication 4, **caractérisé en ce que** le dispositif de réglage de la climatisation (7) est relié à un dispositif pour la mesure de la tension de réseau de bord et il émet le signal de commande pour le dispositif d'entraînement (13, 14) en fonction du signal de sortie du dispositif de mesure.

8. Dispositif selon la revendication 7, **caractérisé en ce que** le dispositif pour la mesure de la tension de réseau de bord fait partie intégrante du dispositif de réglage de la climatisation (7).
